# EUROPÄISCHE PATENTSCHRIFT

(11) **EP 2 382 279 B1**
(45) Veröffentlichungstag und Bekanntmachung des Hinweises auf die Patenterteilung: **31.05.2017**
(21) Anmeldenummer: 09767969.0
(22) Anmeldetag: 02.12.2009
(51) Int. Cl.: C09K 3/18

(54) **VERFAHREN ZUR AUFARBEITUNG GEBRAUCHTER GLYKOLHALTIGER FLUGZEUGENTEISUNGSMITTEL**
PROCESSES FOR REGENERATION OF USED GLYCOL-CONTAINING AIRCRAFT DEICERS
PROCÉDÉS DE RÉGÉNÉRATION DE DÉGIVRANTS D'AVIONS USÉS CONTENANT DES GLYCOLS

(30) Priorität: 24.12.2008 DE 102008063095
(43) Veröffentlichungstag der Anmeldung: 02.11.2011
(73) Patentinhaber: Clariant International Ltd, 4132 Muttenz (CH)
(72) Erfinder: STANKOWIAK, Achim, 84503 Altötting (DE); JESCHKE, Ingo, 84529 Tittmoning-Asten (DE); BERGSTRÖM, Thomas, 85445 Oberding (DE)
(74) Vertreter: Mikulecky, Klaus
(86) Internationale Anmeldenummer: PCT/EP2009/008584
(87) Internationale Veröffentlichungsnummer: WO 2010/072312

(56) Entgegenhaltungen:
- EP-A2- 0 637 620
- EP-A2- 1 889 658
- CA-A1- 2 116 827
- DE-A1- 19 650 682

## Beschreibung

Die Erfindung betrifft ein Verfahren zur Wiederaufbereitung von gebrauchten Flugzeugenteisungsmitteln auf der Basis von Glykolen.

Flugzeugenteisungsmittel auf Basis von Glykolen sind zum Beispiel in US-4 358 389 und US-4 744 913 beschrieben. Sie enthalten im Allgemeinen
(a) etwa 40 bis 80 Gew.-% mindestens eines Glykols mit 2 oder
   3 Kohlenstoffatomen oder eines Diglykols mit 4 bis 6 Kohlenstoffatomen, zum Beispiel Ethylenglykol, Diethylenglykol, Propylenglykol und dergleichen,
(b) 0,05 bis 1,5 Gew.-% mindestens einer polymeren Komponente als Verdickungsmittel, zum Beispiel aus der Gruppe der Polyacrylate, Polymethacrylate, Xanthangummi und Cellulosederivate,
(c) 0,05 bis 1 Gew.-% mindestens eines Tensids, zum Beispiel Olefinsulfonate, Alkylarylsulfonate, Polyoxalkylate und dergleichen,
(d) mindestens einen Korrosionsinhibitor in einer wirksamen Menge, zum Beispiel aus der Gruppe der Triazole, Imidazole und/oder Phosphorsäureester, und
(e) mindestens eine basischen Verbindung zur Einstellung des pH-Wertes von etwa 7,5 bis 11 und
(f) Wasser als Rest auf 100 Gew.-%.

Diese Flugzeugenteisungsmittel werden als solche (das heißt als Konzentrat) oder nach Verdünnung mit Wasser zu deren Konservierung und/oder zur Befreiung von Eis und/oder Schnee auf die zu behandelnden Flugzeugteile aufgebracht. Von den behandelten Flugzeugteilen fließt das Enteisungsmittel, das nun mit Schmelzwasser mehr oder weniger verdünnt und mit Sand, Gummiabrieb, Öl, Verbrennungsrückständen und dergleichen verunreinigt ist, in ein Sammelbecken und wird als Abwasser aus der Flugzeugenteisung oder als gebrauchtes Flugzeugenteisungsmittel bezeichnet.

Teilweise werden die gebrauchten Flugzeugenteisungsmittel mit Hilfe einer biologischen Kläranlage entsorgt. Dies führt aber- trotz der guten biologischen Abbaubarkeit von Glykolen - zu einer unerwünschten Belastung der Kläranlage, besonders bei niedrigen Außentemperaturen und damit verbundener reduzierter Bakterienaktivität, was beim Einsatz von Enteisungsmitteln im Allgemeinen der Fall ist. Ein weiterer Nachteil dieser Art der Entsorgung von Flugzeugenteisungsmitteln ist der Verlust des in großer Menge vorliegenden und wertvollen Glykols.

EP-A-0 637 620 offenbart ein Verfahren zur Wiederaufbereitung von gebrauchten Flugzeugenteisungsmitteln auf der Basis von Glykolen, in dem man
(1) das gebrauchte Flugzeugenteisungsmittel zunächst zur Abtrennung von den suspendierten Verunreinigungen filtriert,
(2) das im Schritt (1) erhaltene Filtrat zur Abtrennung von den polymeren Verdickungsmitteln einer Ultrafiltration unterwirft,
(3) das im Schritt (2) erhaltene Permeat zur Abtrennung von anwesenden Salzen und ionischen Verbindungen der Ultrafiltration mit einem Anionenaustauscher und einem Kationenaustauscher unterwirft, und
(4) die im Schritt (3) erhaltene Lösung zur Entfernung von überschüssigem Wasser und damit Einstellung des Glykolgehaltes auf den gewünschten Wert destilliert.
(5) das erhaltene Glykol-Wassergemisch mit geeigneten Additiven für den Einsatz als Flugzeugenteisungsmittel nachadditiviert.

CA-A-2116827 offenbart ein Verfahren zur Aufarbeitung von gebrauchten Flugzeugenteisungsmitteln, bei dem Glykole wiedergewonnen werden.

EP-A-1 889 658 offenbart ein Verfahren zur Aufarbeitung glykolhaltiger Flugzeugenteisungsmittel, bei dem diese unmittelbar einer Trennung mittels einer Membran unterworfen werden, wobei sich in einem späteren Verfahrensschritt eine Destillation ausschließt. Dieses anlagentechnisch anspruchsvolle und aufwändige Verfahren zur Wiederverwendung gebrauchter Flugzeugenteisungsmittel macht nur an Flughäfen Sinn, die einen großen Bedarf an Flugzeugenteisungsmittel benötigen.

Die Aufgabe der Erfindung besteht darin, ein einfaches und kostengünstiges Verfahren vorzuschlagen, das ein weitgehendes Wiedergewinnen und Wiedereinsetzen insbesondere der Glykole von gebrauchten Flugzeugenteisungsmitteln ermöglicht, und wobei die Wiederverwendbarkeit der Glykole erhalten bleibt. Es wurde nun beobachtet, dass das nach dem Stand der Technik wieder gewonnene und in Enteisungsmittel eingearbeitete Glykol eine nur ungenügende Lebensdauer aufweist. Es enthält einen erheblichen Anteil von Glykolestern und anderen Verunreinigungen, der die weitere Verwendung als Flugzeugenteisungsmittel ausschließt bzw. erheblich erschwert.

Gegenstand vorliegender Erfindung ist somit gemäß Anspruch 1 ein Verfahren zur Aufarbeitung gebrauchter glykolhaltiger Flugzeugenteisungsmittel, in dem man
(1) das gebrauchte und gegebenenfalls mit Landebahnenteisungsmittel verunreinigte Flugzeugenteisungsmittel in einer geeigneten Vorrichtung sammelt,
(2) das gebrauchte Flugzeugenteisungsmittel nachfolgend ohne, oder nach nur grober vorheriger Abtrennung fester oder suspendierter Verunreinigungen, durch Austreiben von Wasser bei erhöhter Temperatur auf einen Glykolgehalt zwischen 55 und 75 Gew.-% bringt,
(3) das so erhaltene, aufkonzentrierte gebrauchte Flugzeugenteisungsmittel zu einer zentralen Aufbereitungsanlage transportiert, wo jenes, nach Einstellung eines pH-Wertes von mindestens 7 durch Versetzung mit einem alkalischen Mittel bis der genannte pH-Wert erreicht wird, einer Feindestillation unterzogen wird, und wobei
(4) das Glykol als Destillat der Feindestillation anfällt.

Bei den Glykolen handelt es sich in bevorzugter Ausführungsform um Glykole mit 2 oder 3 Kohlenstoffatomen oder Diglykole mit 4 bis 6 Kohlenstoffatomen, zum Beispiel Ethylenglykol, Diethylenglykol oder Propylenglykol. Besonders bevorzugt sind Propylenglykol und Monoethylenglykol.

Das gebrauchte Flugzeugenteisungsmittel wird von der Stelle, an der die Flugzeuge auf dem Flughafengelände enteist werden, über Rohrleitungen in ein geeignetes Behältnis wie einen Lagertank oder ein Auffangbecken geleitet. Von dort wird es in eine geeignete Vorrichtung verbracht, in der durch Erhitzen das Wasser teilweise ausgetrieben werden kann. Hierbei ist die Einhaltung von CSB-Grenzen im Kondensat, abhängig von den lokalen Vorschriften, zu berücksichtigen. Der Gehalt des Rückstandes der Wasseraustreibung liegt zwischen 55 und 75 Gew.-% Glykol. Die Austreibung von Wasser erfolgt vorzugsweise bei einer Temperatur von 70 bis 100 °C.

Die weitere Aufarbeitung des aufkonzentrierten, gebrauchten Flugzeugenteisungsmittels erfolgt dann vorzugsweise nicht mehr am Ort des Anfalls dieses gebrauchten Flugzeugenteisungsmittels. Dieses Konzentrat wird vielmehr vom Ort seines Anfalls zu einer Betriebsstätte verbracht, an der eine Feindestillation durchgeführt werden kann. Das Konzentrat wird einer Feindestillation unterworfen, um die Glykole daraus abzutrennen.

Vor dem Transport zur Feindestillation oder vor der Feindestillation kann das aufkonzentrierte gebrauchte Flugzeugenteisungsmittel filtriert werden. Das nach der Filtration erhaltene Konzentrat enthält im Wesentlichen Glykol und Wasser.

Vor der Feindestillation kann der pH-Wert des Konzentrats auf mindestens 7, vorzugsweise mindestens 8 und insbesondere mindestens 9 eingestellt werden. Hierzu wird das Konzentrat mit einem alkalischen Mittel versetzt, bis der genannte pH-Wert erreicht wird. Geeignete alkalische Mittel sind beispielsweise Oxide und Hydroxide von Alkali- und Erdalkalimetallen, wie beispielsweise Calciumoxid, Calciumhydroxid, Natriumhydroxid oder Kaliumhydroxid. Die Alkalien können fest oder in Lösung, vorzugsweise wässriger Lösung verwendet werden.

Die Verfahren und Vorrichtungen zur Durchführung der Feindestillation können den im Stand der Technik bekannten entsprechen. Das aufbereitete Glykol wird als Destillat erhalten. Der Destillationssumpf wird verworfen.

Das erfindungsgemäße Verfahren ist besonders geeignet für gebrauchte Flugzeugenteisungsmittel, welche neben Wasser
(a) 1 bis 60 Gew.-%, vorzugsweise 5 bis 50 Gew.-% Glykole mit 2 oder
   3 Kohlenstoffatomen oder Diglykole mit 4 bis 6 Kohlenstoffatomen,
(b) bis zu 0,8 Gew.-%, vorzugsweise 0,05 bis 0,5 Gew.-%, wasserlösliche Polymere aus der Gruppe der Polyacrylate und Polymethacrylate,
(c) 0,01 bis 1 Gew.-% Tenside, vorzugsweise aus der Gruppe der anionischen Tenside, zum Beispiel Sulfonate wie Olefinsulfonate und Alkylbenzolsulfonate,
(d) 0,001 bis 0,1 Gew.-% Korrosionsinhibitor, vorzugsweise aus der Gruppe der Triazole enthalten.

Die angegebene Zusammensetzung bezieht sich auf das Flugzeugenteisungsmittel vor seinem Gebrauch.

Die angestrebte Qualität der mit dem erfindungsgemäßen Verfahren gewonnenen Glykole wird durch folgende Kriterien festgelegt:
a) eine Tensidkonzentration von weniger als 100 ppm
b) ein Wassergehalt nach DIN 51 777 von max. 1,0 Gew.-%, vorzugsweise max. 0,6 Gew.-%
c) ein Glykolsäuregehalt von weniger als 100 ppm, vorzugsweise weniger als 20 ppm
d) ein Ameisensäuregehalt von weniger als 100 ppm, vorzugsweise weniger als 20 ppm
e) ein Milchsäuregehalt von weniger als 100 ppm, vorzugsweise weniger als 20 ppm
f) ein Essigsäuregehalt von weniger als 100 ppm, vorzugsweise weniger als 20 ppm
g) ein Propionsäuregehalt von weniger als 100 ppm, vorzugsweise weniger als 20 ppm

Der angestrebte Gehalt an Glykolestern der unter c) bis g) genannten Säuren ist höchstens so groß wie der Gehalt an den Säuren.

### Beispiele

Im Folgenden werden Beispiele einer Feindestillation von gebrauchten Flugzeugenteisungsmitteln gegeben.

| Beispiel | | 1 | 2 | 3 | 4 | 5 |
|---|---|---|---|---|---|---|
| Wassergehalt (DIN 51777) | % | 0,5 | 0,4 | 0,46 | n.f. | 0,6 |
| Tensidgehalt | ppm | 66 | 66 | 136 | 82 | 54 |
| Glykolsäure | ppm | < 20 | < 20 | < 20 | < 20 | < 20 |
| Ameisensäure | ppm | < 20 | < 20 | < 20 | < 20 | < 20 |
| Milchsäure | ppm | < 20 | < 20 | < 20 | < 20 | < 20 |
| Essigsäure | ppm | < 20 | < 20 | < 20 | < 20 | < 20 |
| Propionsäure | ppm | < 20 | < 20 | < 20 | < 20 | < 20 |

## Patentansprüche

1. Verfahren zur Aufarbeitung gebrauchter glykolhaltiger Flugzeugenteisungsmittel, in dem man
(1) das gebrauchte und gegebenenfalls mit Landebahnenteisungsmittel verunreinigte Flugzeugenteisungsmittel in einer geeigneten Vorrichtung sammelt,
(2) das gebrauchte Flugzeugenteisungsmittel nachfolgend ohne, oder nach nur grober vorheriger Abtrennung fester oder suspendierter Verunreinigungen, durch Austreiben von Wasser bei erhöhter Temperatur auf einen Glykolgehalt zwischen 55 und 75 Gew.-% bringt,
(3) das so erhaltene, aufkonzentrierte gebrauchte Flugzeugenteisungsmittel zu einer zentralen Aufbereitungsanlage transportiert, wo jenes, nach Einstellung eines pH-Wertes von mindestens 7 durch Versetzung mit einem alkalischen Mittel bis der genannte pH-Wert erreicht wird, einer Feindestillation unterzogen wird, und wobei
(4) das Glykol als Destillat der Feindestillation anfällt.

2. Verfahren nach Anspruch 1, in dem die Abtrennung fester oder suspendierter Verunreinigungen in Schritt (2) eine Grobfiltration umfasst.

3. Verfahren nach Anspruch 1 und/oder 2, in dem das Flugzeugenteisungsmittel vor seinem Gebrauch neben Wasser
(a) 1 bis 88 Gew.-% Glykole mit 2 oder 3 Kohlenstoffatomen oder Diglykole mit 4 bis 6 Kohlenstoffatomen,
(b) bis zu 0,8 Gew.-% wasserlösliche Polymere aus der Gruppe der Polyacrylate und Polymethacrylate,
(c) 0,01 bis 1 Gew.-% Tenside,
(d) 0,001 bis 1 Gew.-% Korrosionsinhibitor enthält.

4. Verfahren nach einem oder mehreren der Ansprüche 1 bis 3, wobei die Austreibung von Wasser bei einer Temperatur von 70 bis 100 °C erfolgt.

5. Verfahren nach einem oder mehreren der Ansprüche 1 bis 4, wobei das Glykol Propylenglykol oder Monoethylenglykol ist.

## Claims

1. A method for reprocessing used aircraft de-icing agents comprising glycol, in which
(1) the used aircraft de-icing agent, possibly contaminated with runway de-icing agent, is collected in a suitable device,
(2) the used aircraft de-icing agent is subsequently brought to a glycol content between 55 and 75% by weight without, or after only coarse, prior separation off of solid or suspended impurities, by expelling water at elevated temperature,
(3) the concentrated used aircraft de-icing agent obtained in this way is transported to a central reprocessing system, where it is subjected to a fine distillation after adjusting the pH to at least 7 by admixing an alkaline agent until the said pH is reached, and where
(4) the glycol is produced as distillate of the fine distillation.

2. The method as claimed in claim 1, in which the separation off of solid or suspended impurities in step (2) involves a coarse filtration.

3. The method as claimed in claim 1 and/or 2, in which the aircraft de-icing agent comprises, prior to its use, besides water,
(a) 1 to 88% by weight of glycols having 2 or 3 carbon atoms or diglycols having 4 to 6 carbon atoms,
(b) up to 0.8% by weight of water-soluble polymers from the group of polyacrylates and polymethacrylates,
(c) 0.01 to 1% by weight of surfactants,
(d) 0.001 to 1 % by weight of corrosion inhibitor.

4. The method as claimed in one or more of claims 1 to 3, where the expulsion of water takes place at a temperature of from 70 to 100°C.

5. The method as claimed in one or more of claims 1 to 4, where the glycol is propylene glycol or monoethylene glycol.

## Revendications

1. Procédé pour le traitement d'agents usagés de dégivrage d'avions, contenant du glycol, dans lequel
(1) on rassemble l'agent de dégivrage d'avions usagé et le cas échéant contaminé par de l'agent de dégivrage de piste d'atterrissage dans un dispositif approprié,
(2) on amène ensuite l'agent de dégivrage d'avions usagé, sans séparation ou après une séparation préalable uniquement grossière de contaminations solides ou en suspension, par évacuation d'eau à température augmentée, à une teneur en glycol entre 55 et 75% en poids,
(3) on transporte l'agent de dégivrage d'avions usagé, concentré, ainsi obtenu vers une installation centrale de traitement, où chaque agent, après réglage d'un pH d'au moins 7, par addition d'un agent alcalin jusqu'à ce que le pH mentionné soit atteint, est soumis à une distillation fine et
(4) le glycol étant obtenu comme distillat de la distillation fine.

2. Procédé selon la revendication 1, dans lequel la séparation de contaminations solides ou en suspension dans l'étape (2) comprend une filtration grossière.

3. Procédé selon la revendication 1 et/ou 2, dans lequel l'agent de dégivrage d'avions contient, avant son utilisation, outre de l'eau
(a) 1 à 88% en poids de glycols comprenant 2 à 3 atomes de carbone ou de diglycols comprenant 4 à 6 atomes de carbone,
(b) jusqu'à 0,8% en poids en poids de polymères solubles dans l'eau du groupe des polyacrylates et des polyméthacrylates,
(c) 0,01 à 1% en poids de tensioactifs,
(d) 0,001 à 1% en poids d'inhibiteur de corrosion.

4. Procédé selon l'une ou plusieurs des revendications 1 à 3, l'évacuation de l'eau étant réalisée à une température de 70 à 100°C.

5. Procédé selon l'une ou plusieurs des revendications 1 à 4, le glycol étant le propylèneglycol ou le monoéthylèneglycol.
